# EUROPÄISCHE PATENTSCHRIFT

(11) **EP 1 332 077 B1**
(45) Veröffentlichungstag und Bekanntmachung des Hinweises auf die Patenterteilung: **20.07.2005**
(21) Anmeldenummer: 01988673.8
(22) Anmeldetag: 26.10.2001
(51) Int. Cl.: B60S 1/40

(54) **VORRICHTUNG ZUM VERBINDEN EINES WISCHERARMS MIT EINEM WISCHBLATT, SOWIE EIN WISCHBLATT BEZIEHUNGSWEISE EIN WISCHERARM**
DEVICE FOR CONNECTING A WIPER ARM TO A WIPER BLADE, A WIPER BLADE AND A WIPER ARM
DISPOSITIF POUR FIXER UN BALAI D'ESSUIE-GLACE SUR UN BRAS D'ESSUIE-GLACE, UN BALAI D'ESSUIE-GLACE ET UN BRAS D'ESSUIE-GLACE

(30) Priorität: 28.10.2000 DE 10053602
(43) Veröffentlichungstag der Anmeldung: 06.08.2003
(73) Patentinhaber: ROBERT BOSCH GMBH, 70442 Stuttgart (DE)
(72) Erfinder: BASEOTTO, Michel, B-3550 Hasselt (BE); WILMS, Christian, B-3582 Beringen (BE); VERELST, Hubert, B-3300 Tienen (BE); BREESCH, Frans, B-3840 Borgloon (BE); VANGEEL, Tom, B-3540 Herk-de-Stad (BE)
(86) Internationale Anmeldenummer: PCT/DE2001/004021
(87) Internationale Veröffentlichungsnummer: WO 2002/034594

(56) Entgegenhaltungen:
- EP-A- 0 895 907
- FR-A- 2 759 048

## Beschreibung

### Stand der Technik

Die Erfindung betrifft eine Vorrichtung zum verbinden eines Wischerarms mit einem Wischblatt nach der Gattung des unabhängigen Anspruchs 1 sowie ein Wischblatt, enthaltend einen wischblattseitigen Teil der Vorrichtung beziehungsweise einen Wischerarm, enthaltend einen wischerarmseitigen Teil der Vorrichtung. Bei einer bekannten solchen Vorrichtung (DE-A-199 52 054) weist das Wischblatt ein Tragelement auf, an dem ein Anschlußelement für einen Wischerarm befestigt ist. Das Anschlußelement ist ein Kunststoffteil, das mit einer ersten Seite auf dem Tragelement aufsitzt und Führungsbahnen besitzt, die von der dem Tragelement gegenüberliegenden Seite in den Körper des Anschlußelements geführt sind. Eine erste Führungsbahn führt von der Oberseite des Anschlußelements in den Körper um von dort in einem Bogen zu einer Achsaufnahme zu gelangen. Zwischen dem Bogen und der Achsaufnahme befindet sich eine Verengung, so dass eine am Wischerarm befestigte Achse, die in den Führungskanal eingeführt wird, über einen Widerstand der Engstelle rastend in die Achsaufnahme gelangt. Der zweite Führungskanal führt von der Oberseite aus in einem Bogen, dessen Mittelpunkt in der Achsaufnahme liegt in das Kunststoffteil. Dadurch kann, nachdem die erste Achse des Wischerarms eingeführt und eingerastet ist, die zweite Achse durch drehen des Wischerarms bzw. des Wischblatts relativ zum Wischerarm ebenfalls eingeführt werden.

Bei diesem System wirkt die Achsaufnahme in Verbindung mit der Achse des Wischerarms als Gelenkverbindung zwischen dem Wischerarm und dem Wischblatt, so dass sich während des Wischbetriebs das Wischblatt relativ zum Wischerarm und damit die Achse relativ zur Achsaufnahme verdrehen. Dies belastet den Kunststoffkörper und insbesondere die Engstelle im Führungskanal, über die das Wischblatt am Wischerarm arretiert ist.

### Vorteile der Erfindung

Die erfindungsgemäße Vorrichtung mit den Merkmalen des Hauptanspruchs hat den Vorteil, dass die Funktionen - Halten des Wischerarms und Bereitstellen eines Drehgelenks zwischen Wischerarm und Wischblatt - getrennt sind. Trotzdem lassen sich Wischerarm und Wischblatt durch einfaches Einführen und Einrasten sicher miteinander verbinden. Das Basisteil wird bereits beim Herstellen des Wischblatts fest aufgebracht und übernimmt dort zusätzliche Haltefunktion zwischen dem Tragelement und einer Wischleiste des Wischblatts. Das Anschlußelement kann dann mit dem Trageteil drehbeweglich und das so vorbereitete Wischblatt fest mit dem Wischerarm verbunden werden.

Durch die in den Unteransprüchen aufgeführten Maßnahmen sind vorteilhafte Weiterbildungen der Vorrichtung nach dem Hauptanspruch möglich. So kann durch eine U-förmige Ausbildung des Anschlußstückes das Basisteil platzsparend aufgenommen werden, wobei gleichzeitig die U-Schenkel des Anschlußstückes als Führungsflächen zum einen für das Basisteil und zum anderen für den Wischerarm dienen können.

Sind mindestens ein oder beide Haltemittel als eine oder mehrere Führungsbahnen ausgebildet, die sich durch die U-Basis bis in die U-Schenkel erstrecken, ergeben sich definierte Haltepositionen, die durch einfaches, weil geführtes Ineinanderstecken erreichbar sind. Werden die Führungsbahnen unterschiedlich ausgebildet, wird vermieden, dass das Wischblatt relativ zum Wischerarm falsch montiert wird.

In vorteilhafter Weiterbildung sind an den U-Schenkeln des Anschlußelements erste Gelenkmittel angeordnet, die mit zweiten am Basisteil angeordneten Gelenkmitteln zusammenarbeiten. Auf diese Weise wird zum einen der sich überlappende Teil des Anschlußelements und des Basisteils platzsparend für die Gelenkanbildung ausgenützt und andererseits durch die flächige Ausbildung der U-Schenkel, die am Basisteil anliegen, die Drehbewegung um die Gelenkmittel spielarm geführt. Ist das Anschlußelement aus Kunststoff gefertigt, ist dadurch vermieden, dass Metallteile des Wischblatts mit Metallteilen des Wischerarms in direkten Kontakt treten, so dass Klappergeräusche oder Korrosion durch aneinander reibendes Metall bereits im Ansatz verhindert sind.

Eine einfache Montagemöglichkeit ist gegeben, wenn mindestens eines der Haltemittel eine Rasteinrichtung aufweist, in die mindestens ein Gegenhaltemittel rastend in Eingriff bringbar ist. Besonders sicher sind diese Haltemittel ausgestaltet, wenn die Rasteinrichtung selbständig verriegelbar und nur manuell wieder entriegelbar ausgestaltet ist. Auf diese Weise ist das Wischblatt schnell am Wischerarm montiert, wobei eine versehentliche Demontage und damit mögliche kritische Situationen während des Betriebs der Wischvorrichtung vermieden sind.

Besonders einfach ist die Rasteinrichtung bedienbar, wenn sie mit einem, das Tragelement übergreifenden Hebelarm verbunden ist. Der Hebelarm kann dann bis unter den Wischerarm geführt und von dort bedient werden. Eine andere Ausgestaltung sieht vor, dass die Rasteinrichtung einen Hebelarm aufweist, der mit einer Öffnung des Wischerarms korrespondiert. Die Bedienung des Hebels erfolgt dann in besonders einfacher Weise direkt durch die Öffnung am Wischerarm.

### Zeichnungen

In den Zeichnungen sind zwei Ausführungsbeispiele der erfindungsgemäßen Vorrichtung dargestellt und in der nachfolgenden Beschreibung näher erläutert. Es zeigen:
Figur 1 eine erfindungsgemäße Vorrichtung nach dem ersten Ausführungsbeispiel in Explosionsdarstellung,
Figur 2 das Anschlußelement des ersten Ausführungsbeispiels gemäß Figur 1 in einer Ansicht von schräg unten,
Figur 3 ein nicht maßstäblicher Schnitt durch das Anschlußelement des ersten Ausführungsbeispiels entlang der Linie III-III,
Figur 4 eine Vorrichtung nach dem zweiten Ausführungsbeispiel in Explosionsdarstellung und
Figur 5 ein Anschlußelement der Vorrichtung nach dem zweiten Ausführungsbeispiel in einer Ansicht von schräg unten.

### Beschreibung

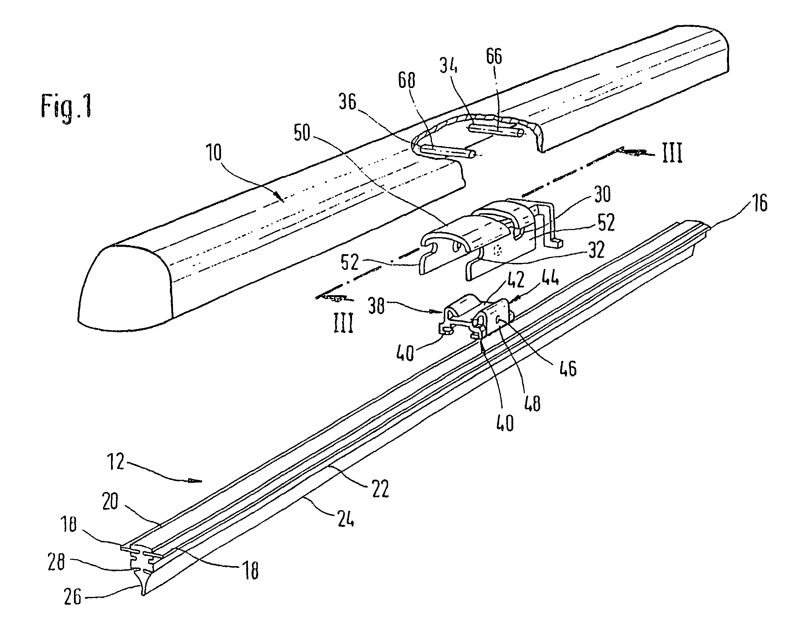

In Figur 1 ist eine erfindungsgemäße Vorrichtung nach dem ersten Ausführungsbeispiel dargestellt, mit einem Wischerarm 10, einem Wischblatt 12 sowie einem Anschlußelement 14.

Das Wischblatt 12 weist ein Tragelement 16 auf, das in Form zweier separaten Leisten 18 in Längsnuten einer Kopfleiste 20 einer Wischleiste 22 eingelegt sind. An die Kopfleiste 20 schließt sich ein eine Wischlippe 24 aufweisender Wischkeil 26 an, der mit der Kopfleiste 20 über einen Kippsteg 28 verbunden ist.

Das Wischblatt 12 ist zwar in einer gestreckten Form gezeichnet, weist jedoch in unbelastetem Zustand eine Krümmung auf, derart, dass die Wischleiste 22 im konkaven und die Kopfleiste 20 im konvexen Bereich der Krümmung verläuft. Die Krümmung selbst ist stärker als die stärkste Scheibenkrümmung, so dass durch das Aufpressen des Wischblatts 12 durch den Wischerarm 10 die Wischlippe 24 über deren gesamter Länge unter im wesentlichen gleichmäßiger Druckverteilung an der Scheibe zur Anlage gelangt. Das Wischblatt kommt folglich ohne ein aufwendiges Tragbügelgestell zur Druckverteilung aus.

Das zwischen dem Wischblatt 12 und dem Wischerarm 10 angeordnete Anschlußelement 14 weist Haltemittel 30, 32 auf, die mit Gegenhaltemittel 34, 36 des Wischerarms 10 zusammenwirken.

Zwischen dem Anschlußelement 14 und dem Tragelement 16 ist ein Basisteil 38 angeordnet, das mit dem Tragelement 16 fest und mit dem Anschlußelement 14 drehbeweglich verbunden ist. Dazu weist das Basisteil 38 Krallen 40 auf, die das Tragelement 16 beziehungsweise dessen Leisten 18 formschlüssig fest umgreifen. Die Leisten 18 sind dadurch in den jeweiligen Längsnuten in der Kopfleiste 20 fixiert. Eine Verbesserung dieses Verbundes wird erreicht, wenn das Basisteil 38 mit dem Tragelement 16 verschweißt oder verlötet ist. Diese Maßnahme kann zusätzlich zu den Krallen 40 oder unabhängig davon eingesetzt werden.

Zwischen den Krallen 40, von denen vorzugsweise vier vorhanden sind, erstreckt sich ein Grundkörper 42, von dem aus in geschwungener Form zwei Seitenwände 44 herausgebogen sind. Diese Seitenwände 44 verlaufen entlang der Längsseiten der Leisten 18 und bieten damit einen zusätzlichen Halt. In einem mittleren Bereich weist jede Seitenwand 44 eine Öffnung 46 auf, die beide als Gelenkmittel 48 dienen.

Das Anschlußelement 14 ist von U-förmiger Gestalt mit einer U-Basis 50 und zwei U-Schenkeln 52, die sich von der U-Basis 50 aus erstrecken. In zusammengebautem Zustand übergreift das Anschlußelement 14 mit seiner U-Basis 50 und seinen U-Schenkeln 52 das Basisteil 38. Dabei gelangen die Innenseiten der U-Schenkel 52 mit mehr oder weniger Spiel an der Außenseite der Seitenwände 44 des Basisteils 38 zur Anlage.

An den Innenseiten der U-Schenkel 52 sind Gelenkmittel 54 angebracht, die die Form zweier nach innen stehender Zapfen 51 aufweisen, deren von der U-Basis wegweisende Kanten angeschrägt sind. Die Zapfen 51 dienen in Zusammenbaustellung als erste Gelenkmittel 54, die mit den Öffnungen 46 als zweiten Gelenkmittel 48 zusammenarbeiten.

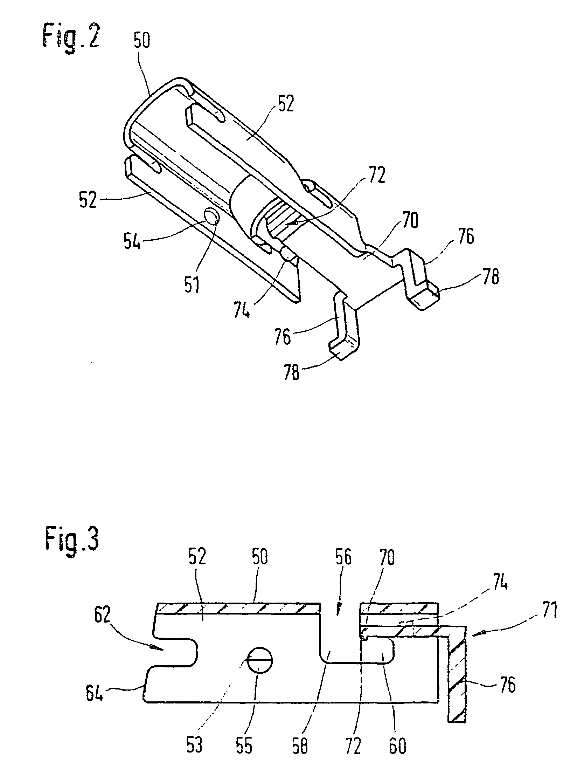

In das Anschlußelement 14 ist eine Führungsbahn 56 (Figur 3) eingebracht, die sich von der U-Basis 50 in den U-Schenkel 52 erstreckt und von dort in einem Bogen 58 in eine Endaufnahme 60 mündet. Ferner ist eine weitere Führungsbahn 62 vorgesehen, die sich von einer Stirnseite 64 in den jeweiligen U-Schenkel 52 erstreckt. Diese Führungsbahnen 56 und 62 dienen in Zusammenbaustellung mit dem Wischerarm 10 als Haltemittel 30, 32, die mit im Wischerarm befestigten, parallel zueinander ausgerichteten Achsen 64 und 66 zusammenarbeiten, die ihrerseits als Gegenhaltemittel 34, 36 wirken.

Beim Zusammenbau der erfindungsgemäßen Vorrichtung wird, wenn das Basisteil 38 bereits fest auf dem Tragelement 16 befestigt ist, das Anschlußelement 14 über das Basisteil 38 geschoben, wobei die U-Schenkel 52 etwas seitlich auslenken, sobald die Zapfen 51 mit ihren Schrägen 55 die Seitenwände 44 des Basisteils berühren. Beim weiteren Eindrücken rasten dann die Zapfen 51 in die Öffnungen 46, so dass eine drehbewegliche Befestigung zwischen Anschlußelement 14 und Basisteil 38 vorliegt. Dann wird das so vorbereitete Wischblatt 12 so an den Wischerarm 10 herangeführt, dass die Achse 68 entlang der Stirnseite 64 bis zur Führungsbahn 62 und die Achse 66 durch die Führungsbahn 56 bis an den Bogen 58 herangeführt sind. Das Wischblatt 12 wird dann entlang der Längserstreckung des Wischblatts beziehungsweise des Wischerarms 10 bewegt, so dass sich die Achse 64 in Richtung der Endaufnahme 60 bewegt und dort zur Ruhe kommt.

Die Endaufnahme 60 ist von einem Rasthebel 70 umgriffen, dessen Rastnase 72 eine Verengung der Führungsbahn 56 darstellt. Der Rasthebel 70 ist an einem federnden Drehgelenk 74 an der Innenseite der U-Schenkel 52 befestigt. Dieses Drehgelenk 74 kann beispielsweise eine Kunststoffverbindung zwischen dem Rasthebel 70 und dem U-Schenkel 52 oder eine Art Filmscharnier zwischen dem Rasthebel 70 und der U-Basis 50 sein. Auf der in Bezug auf das Drehgelenk 74 der Rastnase 72 gegenüberliegenden Seite des Rasthebels 70 spreizt sich der Rasthebel 70 in zwei nach außen geführte Arme 76, die in zwei Kragen 78 münden.

Beim Zusammenbau wird also, wenn die Achse 66 in Richtung der Endaufnahme 60 geführt wird, die Rastnase 72 ausgelenkt und schwingt zurück, sobald die Achse 66 ihre Endposition in der Endaufnahme 60 erreicht hat. Damit ist der Wischerarm fest am Anschlußelement 14 verrastet. Für den Demontagevorgang müssen die Kragen 78, die seitlich unterhalb des Wischerarms 10 hervorstehen, nach unten gedrückt werden, so dass die Rastnase 72 die Endaufnahme 60 freigibt und die Achse entlang des Bogens 58 und der Führungsbahn 56 herausgeführt werden kann. Die Rasteinrichtung ist somit selbstständig verriegelbar und manuell entriegelbar. Das heißt, dass die Rasteinrichtung bei der Montage selbstständig einrastet, für die Demontage jedoch von Hand entrastet werden muß. Dazu weist die Rasteinrichtung mindestens einen, im vorliegenden Fall zwei das Tragelement 16 übergreifende Hebelarme 76 auf, die von außen betätigt werden können.

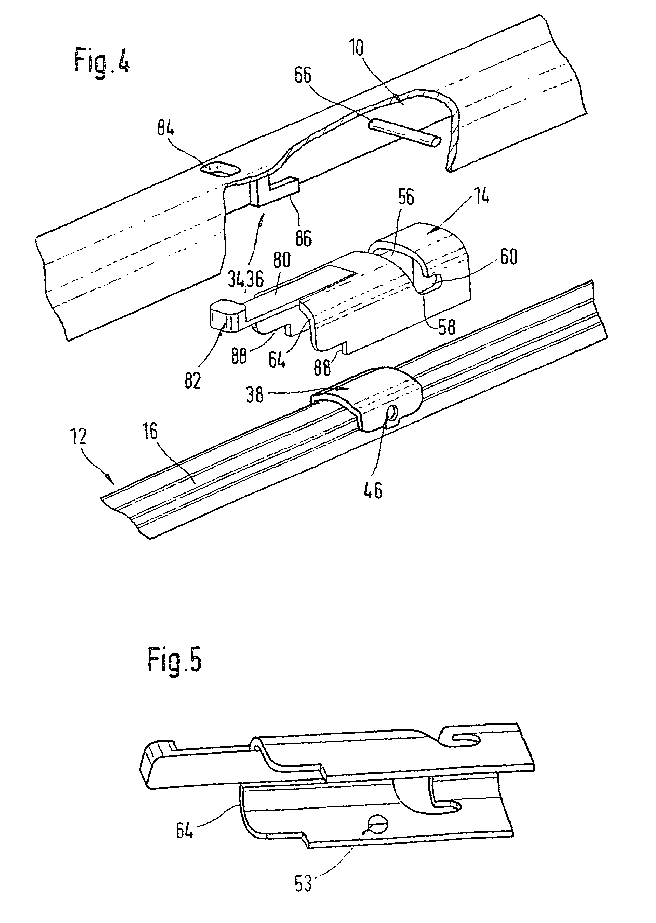

Im zweiten Ausführungsbeispiel (Figuren 4 und 5) sind gleiche Teile mit gleichen Bezugszahlen versehen. Das Tragelement 16 wird auch hier vom Basisteil 38 übergriffen, wodurch ein Halt zwischen der Wischleiste 22 und dem Tragelement 16 gewährleistet ist. Am Basisteil 38 sind Öffnungen 46, die mit Zapfen 53 des Anschlußelementes 14 zusammenwirken.

Im Unterschied zum ersten Ausführungsbeispiel weist das Anschlußelement 14 nur eine Führungsbahn 56 auf, an deren Endaufnahme 60 jedoch keine Rasteinrichtung vorgesehen ist. Als Rasteinrichtung dient ein von der Stirnseite 64 austragender Rasthebel 80, der einen Kragen 82 an seinem freien Ende aufweist. In Zusammenbaustellung korrespondiert der Kragen 82 mit einer Öffnung 84 im Wischerarm 10. Ferner weist der Wischerarm 10 an seinen Innenseiten sich gegenüberliegende Erhebungen 86 (in Figur 4 nur eine dargestellt) auf, die als Gegenhaltemittel 34, 36 mit entsprechenden Ausnehmungen 88 an der Stirnseite 64 des Anschlußelement 14 eingebracht sind.

Bei der Montage wird, nach dem das Anschlußelement 14 in bekannter Weise auf das Basisteil 38 aufgerastet ist, das so zusammengesetzte Wischblatt 12 so von unten an den Wischerarm herangeführt, dass die Achse 64 in die Führungsbahn 56 einführbar und die Erhebungen 86 entlang der Stirnseite 64 vorbeiführbar sind. Erreichen die Erhebungen 86 die Ausnehmungen 88, sowie die Achse 66 den Bogen 58, wird das Wischblatt entlang der Längserstreckung des Wischblatts 12 bewegt, so dass die Achse 66 in die Endaufnahme 60 und die Erhebungen 86 in die Ausnehmungen 88 eingreifen. Die Ausnehmungen 88 wirken dabei als Führungsbahnen für die Erhebungen 86. Der Kragen 82 rastet dann in die Öffnung 84 und verhindert, dass sich das Wischblatt 12 selbsttätig wieder entriegelt. Das Entriegeln erfolgt manuell durch Druck auf den durch die Öffnung 84 ragenden Kragen 82.

Ein Wischblatt 12, das für die erfindungsgemäße Vorrichtung adaptiert ist, weist sich folglich dadurch aus, dass das Tragelement 16 von einem Basisteil 38 fest umfaßt ist und dieses Basisteil 38 gelenkig mit einem Anschlußelement verbindbar ist.

Ein Wischerarm 10, der für die erfindungsgemäße Vorrichtung adaptiert ist, weist sich dadurch aus, dass zumindest zwei Haltemittel, die entweder in Form zweier Achsen oder in Form einer oder mehrerer Erhebungen innerhalb des Wischerarms ausgestaltet sind, so dass sie mit einem Anschlußelement in Eingriff bringbar sind.

## Patentansprüche

1. Vorrichtung zum Verbinden eines Wischerarms (10) mit einem Wischblatt (12), das ein Tragelement (16) aufweist, an dem ein Anschlußelement (14) für den Wischerarm (12) angeordnet ist, das mindestens zwei Haltemittel (30, 32) für mit dem Wischerarm (10) verbundene Gegenhaltemittel (34, 36) aufweist, **dadurch gekennzeichnet, dass** zwischen dem Anschlußelement (14) und dem Tragelement (16) ein Basisteil (38) angeordnet ist, das fest mit dem Tragelement (16) und drehbeweglich mit dem Anschlußelement (14) verbunden ist.

2. Vorrichtung nach Anspruch 1, **dadurch gekennzeichnet, dass** das Anschlußelement (14) U-förmig ist mit einer U-Basis (50) und zwei U-Schenkeln (52) und das Basisteil (38) aufnimmt.

3. Vorrichtung nach Anspruch 2, **dadurch gekennzeichnet, dass** mindestens ein Haltemittel (30, 32) eine Führungsbahn (56, 62) aufweist, die sich durch die U-Basis (50) bis in die U-Schenkel (52) erstreckt.

4. Vorrichtung nach einem der Ansprüche 2 oder 3, **dadurch gekennzeichnet, dass** an den U-Schenkeln (52) erste Gelenkmittel (54) angeordnet sind, die mit zweiten am Basisteil (38) angeordneten Gelenkmitteln (48) zusammenarbeiten.

5. Vorrichtung nach einem der vorhergehenden Ansprüche, **dadurch gekennzeichnet, dass** mindestens eines der Haltemittel (30) eine Rasteinrichtung (71) aufweist, in die mindestens ein Gegenhaltemittel (34) rastend in Eingriff bringbar ist.

6. Vorrichtung nach Anspruch 5, **dadurch gekennzeichnet, dass** die Rasteinrichtung (71) selbstständig ver- und manuell entriegelbar ist.

7. Vorrichtung nach einem der Ansprüche 5 oder 6, **dadurch gekennzeichnet, dass** die Rasteinrichtung (71) mit mindestens einem, das Tragelement 16 übergreifenden Hebelarm 76 verbunden ist.

8. Vorrichtung nach einem der Ansprüche 5 oder 6, **dadurch gekennzeichnet, dass** die Rasteinrichtung (71) einen Hebelarm (80) aufweist, der mit einer Öffnung (84) im Wischerarm (10) korrespondiert.

9. Wischblatt mit einem Tragelement (16), an dem ein Anschlusselement (14) für den Wischerarm (12) angeordnet ist, das mindestens zwei Haltemittel (30, 32) für mit dem Wischerarm (10) verbundene Gegenhaltemittel (34, 36) aufweist, **dadurch gekennzeichnet, dass** zwischen dem Anschlusselement (14) und dem Tragelement (16) ein Basisteil (38) angeordnet ist, das fest mit dem Tragelement (16) und drehbeweglich mit dem Anschlusselement (14) verbunden ist.

10. Wischblatt nach Anspruch 9, **dadurch gekennzeichnet, dass** das Anschlusselement (14) U-förmig ist mit einer U-Basis (50) und zwei U-Schenkeln (52) und das Basisteil (38) aufnimmt.

11. Wischblatt nach Anspruch 10, **dadurch gekennzeichnet, dass** mindestens ein Haltemittel (30, 32) eine Führungsbahn (56, 62) aufweist, die sich durch die U-Basis (50) bis in die U-Schenkel (52) erstreckt.

12. Wischblatt nach einem der Ansprüche 10 oder 11, **dadurch gekennzeichnet, dass** an den U-Schenkeln (52) erste Gelenkmittel (54) angeordnet sind, die mit zweiten am Basisteil (38) angeordneten Gelenkmitteln (48) zusammenarbeiten.

13. Vorrichtung nach einem der Ansprüche 9 bis 12, **dadurch gekennzeichnet, dass** mindestens eines der Haltemittel (30) eine Rasteinrichtung (71, 80) aufweist, die mit mindestens einem Gegenhaltemittel (34, 84) rastend in Eingriff bringbar ist.

14. Wischblatt nach Anspruch 13, **dadurch gekennzeichnet, dass** die Rasteinrichtung (71, 80) selbstständig ver- und manuell entriegelbar ist.

15. Wischblatt nach einem der Ansprüche 13 oder 14, **dadurch gekennzeichnet, dass** die Rasteinrichtung (71) mit mindestens einem, das Tragelement (16) übergreifenden Hebelarm (76) verbunden ist.

16. Wischblatt nach einem der Ansprüche 13 oder 14, **dadurch gekennzeichnet, dass** die Rasteinrichtung (71) einen Hebelarm (80) aufweist, der mit einer Öffnung (84) im Wischerarm (10) korrespondiert.

## Claims

1. Device for connecting a wiper arm (10) to a wiper blade (12) which has a supporting element (16) on which a joining element (14) for the wiper arm (12) is arranged, the said joining element having at least two retaining means (30, 32) for mating retaining means (34, 36) which are connected to the wiper arm (10), **characterized in that** a base part (38) is arranged between the joining element (14) and the supporting element (16) and is connected fixedly to the supporting element (16) and rotatably to the joining element (14).

2. Device according to Claim 1, **characterized in that** the joining element (14) is U-shaped with a U-base (50) and two U-limbs (52) and receives the base part (38).

3. Device according to Claim 2, **characterized in that** at least one retaining means (30, 32) has a guide track (56, 62) which extends through the U-base (50) into the U-limbs (52).

4. Device according to either of Claims 2 and 3, **characterized in that** first articulation means (54) are arranged on the U-limbs (52) and cooperate with second articulation means (48) arranged on the base part (38).

5. Device according to one of the preceding claims, **characterized in that** at least one of the retaining means (30) has a latching device (71) into which at least one mating retaining means (34) can be brought into engagement in a latching manner.

6. Device according to Claim 5, **characterized in that** the latching device (71) can be locked independently and released manually.

7. Device according to either of Claims 5 and 6, **characterized in that** the latching device (71) is connected to at least one lever arm (76) which engages over the supporting element (16).

8. Device according to either of Claims 5 and 6, **characterized in that** the latching device (71) has a lever arm (80) which corresponds with an opening (84) in the wiper arm (10).

9. Wiper blade having a supporting element (16) on which a joining element (14) for the wiper arm (12) is arranged, which joining element has at least two retaining means (30, 32) for mating retaining means (34, 36) connected to the wiper arm (10), **characterized in that** a base part (38) is arranged between the joining element (14) and the supporting element (16) and is connected fixedly to the supporting element (16) and rotatably to the joining element (14).

10. Wiper blade according to Claim 9, **characterized in that** the joining element (14) is U-shaped with a U-base (50) and two U-limbs (52) and receives the base part (38).

11. Wiper blade according to Claim 10, **characterized in that** at least one retaining means (30, 32) has a guide track (56, 62) which extends through the U-base (50) into the U-limbs (52).

12. Wiper blade according to either of Claims 10 and 11, **characterized in that** first articulation means (54) are arranged on the U-limbs (52) and cooperate with second articulation means (48) arranged on the base part (38).

13. Device according to one of Claims 9 to 12, **characterized in that** at least one of the retaining means (30) has a latching device (71, 80) which can be brought into engagement with at least one mating retaining means (34, 84) in a latching manner.

14. Wiper blade according to Claim 13, **characterized in that** the latching device (71, 80) can be locked independently and released manually.

15. Wiper blade according to either of Claims 13 and 14, **characterized in that** the latching device (71) is connected to at least one lever arm (76) which engages over the supporting element (16).

16. Wiper blade according to either of Claims 13 and 14, **characterized in that** the latching device (71) has a lever arm (80) which corresponds with an opening (84) in the wiper arm (10).

## Revendications

1. Dispositif pour relier un balai d'essuie-glace (12) à un bras d'essuie-glace (10), comprenant un élément porteur (16) sur lequel est monté un élément de raccordement (14) au bras d'essuie-glace (10), présentant au moins deux moyens de maintien (30, 32) correspondant à des moyens de maintien opposés (34, 36) reliés au bras d'essuie-glace (10),
**caractérisé en ce qu'**
entre l'élément de raccordement (14) et l'élément porteur (16) se trouve une partie de base (38) solidaire de l'élément porteur (16) tout en pouvant se déplacer par rotation avec l'élément de raccordement (14).

2. Dispositif selon la revendication 1,
**caractérisé en ce que**
l'élément de raccordement (14) a la forme d'un U avec une base de U (50) et deux branches de U (52), et il accueille la partie de base (38).

3. Dispositif selon la revendication 2,
**caractérisé en ce qu'**
au moins un moyen de maintien (30, 32) présente une piste de guidage (56, 62) qui s'étend à travers la base de U (50) jusque dans les branches de U (52).

4. Dispositif selon la revendication 2 ou 3,
**caractérisé en ce que**
sur les branches de U (52) sont montés des premiers moyens d'articulation (54) qui coopèrent avec des seconds moyens d'articulation (48) montés sur la partie de base (38).

5. Dispositif selon les revendications précédentes,
**caractérisé en ce qu'**
au moins un moyen de maintien (30) présente un dispositif d'arrêt (71) dans lequel au moins un moyen de maintien opposé (34) peut être amené en prise avec blocage.

6. Dispositif selon la revendication 5,
**caractérisé en ce que**
le dispositif d'arrêt (71) peut être automatiquement verrouillé et déverrouillé à la main.

7. Dispositif selon la revendication 5 ou 6,
**caractérisé en ce que**
le dispositif d'arrêt (71) est relié à au moins un bras de levier (76) chevauchant l'élément porteur (16).

8. Dispositif selon la revendication 5 ou 6,
**caractérisé en ce que**
le dispositif d'arrêt (71) comprend au moins un bras de levier (80) qui correspond à une ouverture (84) prévue dans le bras d'essuie-glace (10).

9. Balai d'essuie-glace comportant un élément porteur (16) sur lequel se trouve un élément de raccordement (14) au bras d'essuie-glace (10), présentant au moins deux moyens de maintien (30, 32) correspondant à des moyens de maintien opposés (34, 36) reliés au bras d'essuie-glace (10),
**caractérisé en ce qu'**
entre l'élément de raccordement (14) et l'élément porteur (16) se trouve une partie de base (38) solidaire de l'élément porteur (16) et qui peut se déplacer en rotation avec l'élément de raccordement (14).

10. Balai d'essuie-glace selon la revendication 9,
**caractérisé en ce que**
l'élément de raccordement (14) a la forme d'un U avec une base de U (50) et deux branches de U (52), et il accueille la partie de base (38).

11. Balai d'essuie-glace selon la revendication 10,
**caractérisé en ce qu'**
au moins un moyen de maintien (30, 32) présente une piste de guidage (56, 62) qui s'étend à travers la base de U (50) jusque dans les branches de U (52).

12. Balai d'essuie-glace selon la revendication 10 ou 11,
**caractérisé en ce que**
sur les branches de U (52) sont montés des premiers moyens d'articulation (54) qui coopèrent avec des seconds moyens d'articulation (48) montés sur la partie de base (38).

13. Balai d'essuie-glace selon une des revendications 9 à 12,
**caractérisé en ce qu'**
au moins un moyen de maintien (30) présente un dispositif d'arrêt (71, 80) qui peut être amené en prise par accrochage avec au moins un moyen de maintien opposé (34, 84).

14. Balai d'essuie-glace selon la revendication 13,
**caractérisé en ce que**
le dispositif d'arrêt (71, 80) peut être automatiquement verrouillé et déverrouillé à la main.

15. Balai d'essuie-glace selon la revendication 13 ou 14,
**caractérisé en ce que**
le dispositif d'arrêt (71) est relié à au moins un bras de levier (76) chevauchant l'élément porteur (16).

16. Balai d'essuie-glace selon la revendication 13 ou 14,
**caractérisé en ce que**
le dispositif d'arrêt (71) comprend au moins un bras de levier (80) qui correspond à une ouverture (84) prévue dans le bras d'essuie-glace (10).
